(19) Europäisches Patentamt
European Patent Office
Office européen des brevets

(11) **EP 4 538 229 A1**

(12) **EUROPEAN PATENT APPLICATION**
published in accordance with Art. 153(4) EPC

(43) Date of publication:
**16.04.2025 Bulletin 2025/16**

(21) Application number: **23823862.0**

(22) Date of filing: **09.06.2023**

(51) International Patent Classification (IPC):
*C01B 33/193* [(2006.01)]

(52) Cooperative Patent Classification (CPC):
**C01B 33/193**

(86) International application number:
**PCT/JP2023/021630**

(87) International publication number:
**WO 2023/243572 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.06.2022 JP 2022095197
13.06.2022 JP 2022095198
13.06.2022 JP 2022095199**

(71) Applicants:
• **AGC INC.**
**Chiyoda-ku,**
**Tokyo 1008405 (JP)**
• **AGC Si-Tech Co., Ltd.**
**Fukuoka 808-0027 (JP)**

(72) Inventors:
• **KATAYAMA, Hajime**
**Tokyo 100-8405 (JP)**
• **FUKUMOTO, Kohta**
**Tokyo 100-8405 (JP)**
• **KONDO, Masashi**
**Tokyo 100-8405 (JP)**
• **KAMO, Hiromichi**
**Tokyo 100-8405 (JP)**
• **ARIMITSU, Shinnosuke**
**Tokyo 100-8405 (JP)**

(74) Representative: **Müller-Boré & Partner
Patentanwälte PartG mbB
Friedenheimer Brücke 21
80639 München (DE)**

(54) **METHOD FOR PRODUCING SPHERICAL SILICA POWDER**

(57) The present invention provides a novel method for producing a spherical silica powder capable of efficiently producing spherical silica particles having a small specific surface area. The method for producing a spherical silica powder of the present invention fires a silica precursor having a pore volume of 0.1-2.0 mL/g and a specific surface area of 200-1000 m²/g or performs heat treatment at a temperature that satisfies -0.97x+1180<y<-0.97x+1310, taking the sodium concentration as x (mass ppm) and the heat treatment temperature as y (°C), using a silica precursor having a sodium concentration of 1-300 mass ppm and firing in a state in which the particles are in contact with each other when performing firing or heat treatment of a spherical, porous silica precursor.

**EP 4 538 229 A1**

## Description

### TECHNICAL FIELD

The present invention relates to a method for producing a spherical silica powder.

### BACKGROUND ART

In related art, silica particles including silica ($SiO_2$) as a main component have been used for various applications, such as electronic materials for printed wiring boards, package wiring boards, and the like, optical materials for lenses, optical films, and the like, functional materials for catalysts, catalyst carriers, and the like, and pigments for paints, cosmetics, and the like.

The silica used is required to have a small surface area, since silanol groups on a surface thereof can affect other components, can cause to increase viscosity of a slurry, and can provide a moist feel.

In recent years, with an increase in an amount of information communication in a field of communications, utilization of high-frequency band signals has become widespread in electronic devices and communications equipment, and there is a demand for a material with a low dielectric loss tangent for use in high-frequency band devices. Silica has a small dielectric constant (3.9), a small coefficient of thermal expansion (3 ppm/°C to 7.9 ppm/°C), is a promising filler material with a low dielectric constant and a low coefficient of thermal expansion, and is expected to be used in high-frequency band dielectric devices and the like.

Silica particles can be obtained by, for example, a flame fusion method, a gas phase method, a gas phase oxidation method, a wet method, a precipitation method, or the like, and various production methods thereof have been studied.

For example, Patent Literature 1 proposes a method for obtaining monodisperse nonporous spherical silica by dispersing porous silica gel in a high-temperature gas and firing the gel to make it nonporous.

Patent Literature 2 describes a method for obtaining a synthetic amorphous silica powder by subjecting a granulated silica powder to a spheroidizing treatment, and then washing and drying the resulting powder.

Patent Literature 3 describes a method for obtaining fused spherical silica by heating, firing, and pulverizing porous synthetic silica, and then spray -fusing the pulverized material.

Patent Literature 4 proposes a method for producing a fused spherical silica powder with a reduced dielectric loss tangent, the method including a dielectric loss tangent reduction treatment of performing heat treatment with heating temperature (°C) × heating time (h) set to 1000 (°C·h) to 26400 (°C·h) for a predetermined time at a temperature of 500°C to 1100°C on a raw material fused spherical silica powder having an average circularity of 0.85 or more and a specific surface area of 1 $m^2$/g to 30 $m^2$/g.

### CITATION LIST

### PATENT LITERATURE

Patent Literature 1: JP2921058B
Patent Literature 2: JP5686099B
Patent Literature 3: JPH04-66809B
Patent Literature 4: JP6814906B

### SUMMARY OF INVENTION

### TECHNICAL PROBLEM

In the method described in Patent Literature 1, as a treatment amount increases, there is a risk that temperature irregularity in the gas will increase, making it difficult to perform uniform processing. Therefore, it is not suitable for processing within a narrow range of conditions, and it is difficult to obtain a spherical silica powder of uniform quality. Although this method can produce particles with a small pore volume, it is difficult to obtain particles with a low specific surface area. In the method described in Patent Literature 1, in order to further reduce the specific surface area, it is necessary to repeat the same treatment or to further increase the firing temperature. If the firing temperature is too high, high temperature parts or surfaces of particles that have a long residence time may melt, causing strong fusion and sintering between the particles. Coarse particles may be generated and cause defects when mixed with resin.

In the method described in Patent Literature 2, fine particles of the silica powder evaporated in argon-oxygen plasma adhere to a surface of the obtained silica powder, and in order to obtain a powder with a low specific surface area, the adhered powder must be washed away.

In the method described in Patent Literature 3, silica is fused to form spherical particles, but in order to obtain spherical particles, it is necessary to turn non-spherical silica into droplets at a high enough temperature to melt, and then to cool and solidify the droplets while keeping the droplets from being in contact with each other. Precise control of the above points requires large amounts of energy and precise control of production steps, making the method unsuitable for large-scale production.

The method described in Patent Literature 4 includes a step of preparing the raw material fused spherical silica, and therefore requires two times of fusing and firing at high temperatures, making the production steps complicated and time-consuming and costly.

A problem to be solved by one embodiment of the present disclosure is to provide a novel method for producing a spherical silica powder that overcomes the above-mentioned problems in the spherical silica production techniques in the related art and can efficiently produce spherical silica particles having a small specific surface area.

A problem to be solved by another embodiment of the present disclosure is to provide a novel method for producing a spherical silica powder that overcomes the above-mentioned problems in the spherical silica production techniques in the related art and can efficiently produce spherical silica particles having a sufficiently small dielectric loss tangent and being easy to handle.

A problem to be solved by yet another embodiment of the present disclosure is to provide a novel method for producing a spherical silica powder that overcomes the above-mentioned problems in the spherical silica production techniques in the related art and can efficiently produce spherical silica particles having a sufficiently small dielectric loss tangent.

SOLUTION TO PROBLEM

The present invention includes aspects relating to the following (1) to (14).

(1) A method for producing a spherical silica powder, the method including firing a spherical and porous silica precursor in a state where particles of the silica precursor are in contact with each other.

(2) The method for producing a spherical silica powder according to (1), in which when the silica precursor is subjected to an ultrasonic treatment as follows, a ratio $D_2/D_1$ of a volume-based cumulative 50% particle diameter $D_2$ of the silica precursor after the ultrasonic treatment to a volume-based cumulative 50% particle diameter $D_1$ of the silica precursor before the ultrasonic treatment is 0.9 or more, and

in the ultrasonic treatment, distilled water is added to the silica precursor to prepare a 0.05 mass% slurry, followed by subjecting to an ultrasonic dispersion treatment at a frequency of 45 kHz for 2 minutes.

(3) The method for producing a spherical silica powder according to (1) or (2), in which the silica precursor has a weight loss ratio of 10% or less when dried at 230°C for 12 hours.

(4) The method for producing a spherical silica powder according to any one of (1) to (3), in which the silica precursor is fired by at least one heat treatment of a heat treatment with leaving to stand or a heat treatment by a rotary furnace.

(5) A method for producing a spherical silica powder, the method including performing a heat treatment on a spherical and porous silica precursor, in which the silica precursor has a sodium concentration of 1 ppm by mass to 300 ppm by mass, and assuming the sodium concentration as x (ppm by mass) and a heat treatment temperature as y (°C), the silica precursor is subjected to the heat treatment at a temperature satisfying $-0.97x + 1180 < y < -0.97x + 1310$.

(6) The method for producing a spherical silica powder according to (5), in which the silica precursor has a sodium concentration of 1 ppm by mass to 200 ppm by mass.

(7) The method for producing a spherical silica powder according to (5) or (6), in which the silica precursor is fired by at least one heat treatment selected from the group consisting of a heat treatment with leaving to stand, a heat treatment by a rotary furnace, and a heat treatment by spray combustion.

(8) The method for producing a spherical silica powder according to any one of (5) to (7), in which the silica precursor is fired in a state where particles of the silica precursor are in contact with each other.

(9) A method for producing a spherical silica powder, the method including firing a spherical and porous silica precursor, in which the silica precursor has a pore volume of 0.1 ml/g to 2.0 ml/g and a specific surface area of 200 $m^2$/g to 1000 $m^2$/g.

(10) The method for producing a spherical silica powder according to (9), in which the silica precursor has an average pore diameter of 1.0 nm to 50.0 nm.

(11) The method for producing a spherical silica powder according to (9) or (10), in which the silica precursor has an average circularity of 0.90 or more.

(12) The method for producing a spherical silica powder according to any one of (9) to (11), in which the silica precursor is fired in a state where particles of the silica precursor are in contact with each other.

(13) The method for producing a spherical silica powder according to any one of (9) to (12), in which the silica precursor is fired by at least one heat treatment of a heat treatment with leaving to stand or a heat treatment by a rotary furnace.

(14) The method for producing a spherical silica powder according to any one of (1) to (13), the method further including, after the firing, crushing the particles such that the average circularity of the particles does not fall below 0.90.

ADVANTAGEOUS EFFECTS OF INVENTION

According to one embodiment of the present disclosure, by firing the spherical and porous silica precursor in the state where the particles of the silica precursor are in contact with each other, it is possible to efficiently produce a spherical silica powder with a small specific surface area and consistent quality even under treatment conditions within a narrow range.

According to another embodiment of the present disclosure, by subjecting a spherical and porous silica precursor having a sodium concentration of 1 ppm by mass to 300 ppm by mass to a heat treatment at a temperature that satisfies $-0.97x + 1180 < y < -0.97x + 1310$, where x represents the sodium concentration (ppm by mass) and y represents a heat treatment temperature (°C), it is possible to efficiently produce a spherical silica powder that has a sufficiently small dielectric loss tangent and excellent handleability.

According to yet another embodiment of the present disclosure, by firing a spherical and porous silica precursor having a pore volume of 0.1 ml/g to 2.0 ml/g and a specific surface area of 200 $m^2$/g to 1000 $m^2$/g, a spherical silica powder having a sufficiently small dielectric loss tangent can be efficiently produced.

The spherical silica powder obtained by the production methods of these embodiments of the present disclosure has a spherical particle shape, and therefore has excellent mixability with resin and excellent processability in resin compositions. The spherical silica powder obtained by the production methods of these embodiments of the present disclosure can be used as a filler for electronic materials and optical materials, as well as a material for paints and cosmetics, and is particularly suitable for use as an electronic material because of the sufficiently small dielectric loss tangent.

DESCRIPTION OF EMBODIMENTS

The present invention will be described below, but the present invention is not limited to examples described below. Note that in the present description, an expression "to" used to express a numerical range includes numerical values before and after it as a lower limit value and an upper limit value of the range, respectively.

In the present description, "mass" is synonymous with "weight".

(Features of First Production Method)

A first production method of a spherical silica powder of the present embodiment (hereinafter also referred to as Present Production Method 1) includes firing a spherical and porous silica precursor in a state where particles of the silica precursor are in contact with each other. When the silica precursor is fired in the state where the particles thereof are in contact with each other, firing can be performed with a small volume, and thus, as compared with, for example, a case where the silica precursor is dispersed in a gas and then fired, temperature irregularity and time irregularity during firing are smaller, and therefore, a spherical silica powder with consistent quality can be obtained. In a spray combustion method in which a silica precursor is dispersed in a gas, even when a raw material powder is injected from a center of flame, a temperature of the gas being injected at the same time, a dispersion state of the raw material, a temperature difference due to different parts passing through the flame, a difference in time it takes to pass through the flame, and a time it takes to cool due to distribution of air flow (flow rate) inside the device, lead to variations in firing conditions. If the temperature is low or the time is short, porous portions with a large surface area remain, and particles with a low specific surface area or dielectric loss tangent cannot be obtained. If the temperature is too high, surfaces of the particles are fused and the particles coalesce, a phenomenon that a surface with fine particles adhering to the surface is formed occurs, and as with the case of a low temperature, particles with a low specific surface area and a small dielectric loss tangent cannot be obtained. By firing the silica precursor in the state where the particles thereof are in contact with each other, the firing conditions for each silica precursor can be made uniform and a consistent quality can be maintained.

(Features of Second Production Method)

A second production method of a spherical silica powder of the present embodiment (hereinafter also referred to as Present Production Method 2) includes performing a heat treatment on a spherical and porous silica precursor, in which the silica precursor has a sodium (Na) concentration of 1 ppm by mass to 300 ppm by mass, and assuming the sodium concentration as x (ppm by mass) and a heat treatment temperature as y (°C), the silica precursor is subjected to the heat treatment at a temperature satisfying $-0.97x + 1180 < y < -0.97x + 1310$. When the silica precursor is burned by performing the heat treatment at a temperature within the above range, it becomes possible to obtain spherical silica that is non-porous and has non-fused particles, and thus spherical silica particles that have high fluidity, high dispersibility in a slurry, a low specific surface area, and a small dielectric loss tangent are obtained.

(Features of Third Production Method)

A third production method of a spherical silica powder of the present embodiment (hereinafter also referred to as Present Production Method 3) includes firing a spherical and porous silica precursor, in which the silica precursor has a pore volume of 0.1 ml/g to 2.0 ml/g and a specific surface area of 200 m$^2$/g to 1000 m$^2$/g. When the pore volume and specific surface area of the silica precursor are within the above ranges, the specific surface area can be sufficiently reduced by firing, and sintering is unlikely to occur, resulting in spherical silica particles with a low specific surface area and a small dielectric loss tangent.

(Silica Precursor)

The silica precursors used in Present Production Method 1, Present Production Method 2 and Present Production Method 3 are porous. The silica precursor is said to be porous if pores are uniformly distributed in the silica precursor.
By using porous silica particles as a raw material, it is easier to obtain particles with controlled shape and particle size distribution, as compared with particles made by crushing and firing a non-porous raw material.

<Sodium (Na) Concentration of Silica Precursor>

When porous silica is heated, primary particles of several nm to several tens of nm that constitute an internal pore structure are fused, and thus the specific surface area decreases, and the pores become filled. It is also known that the presence of sodium decreases a fusing point. Through studies by the present inventors, it has been discovered that by setting heat treatment conditions according to a sodium concentration in the porous silica precursor, it is possible to obtain silica particles with a reduced dielectric loss tangent while preventing the fusion between particles.
In Present Production Method 2, the silica precursor used has a sodium concentration in the range of 1 ppm by mass to 300 ppm by mass. When the sodium concentration of the silica precursor is 1 ppm by mass or more, the silica precursor can be made non-porous at a lower temperature than when a high-purity silica precursor having a sodium concentration of less than 1 ppm by mass is used, and when the sodium concentration is 300 ppm by mass or less, silica particles with a low dielectric loss tangent can be obtained. The sodium concentration of the silica precursor is preferably 2 ppm by mass or more, more preferably 3 ppm by mass or more, and still more preferably 10 ppm by mass or more, and is preferably 200 ppm by mass or less, more preferably less than 200 ppm by mass, still more preferably 150 ppm by mass or less, particularly preferably 100 ppm by mass or less, and most preferably 50 ppm by mass or less.
A sodium content of the silica precursor can be measured by atomic absorption spectrometry after adding perchloric acid and hydrofluoric acid to the silica precursor and igniting to remove the main component silicon.

<Specific Surface Area of Silica Precursor>

In Present Production Method 1 and Present Production Method 2, it is preferable that a specific surface area of the silica precursor is in a range of 200 m$^2$/g to 1000 m$^2$/g. In Present Production Method 3, the silica precursor with a specific surface area in a range of 200 m$^2$/g to 1000 m$^2$/g is used. When the specific surface area is 200 m$^2$/g or more, the specific surface area after firing can be reduced while preventing sintering of the particles. When the specific surface area is 1000 m$^2$/g or less, strength of the silica precursor particles is sufficiently high. When the specific surface area of the silica precursor is within the above range, even when the particles are heated in a state of being in contact with each other during firing, the particles are not strongly bonded to each other, and spherical particles can be obtained. The specific surface area is more preferably 400 m$^2$/g or more, still more preferably 500 m$^2$/g, and particularly preferably 700 m$^2$/g or more, and is more preferably 950 m$^2$/g or less, and still more preferably 900 m$^2$/g or less.
The specific surface area is obtained by a multi-point BET method based on a nitrogen adsorption method using the specific surface area and pore distribution measuring device (for example, "BELSORP-mini II" manufactured by MicrotracBEL Corp., or "TriStar II" manufactured by Micromeritics Instrument Corporation).

<Pore Volume of Silica Precursor>

In Present Production Method 1 and Present Production Method 2, a pore volume of the silica precursor is preferably in a range of 0.1 ml/g to 2.0 ml/g. In Present Production Method 3, the silica precursor having a pore volume in a range of 0.1 ml/g to 2.0 ml/g is used. When the pore volume is 0.1 ml/g or more, an apparent volume of the particles decreases when the silica is made non-porous during firing, and voids between the particles increase, making sintering difficult or resulting in a powder with weak sintering strength. When the pore volume is 2.0 ml/g or less, a bulk density during charging before firing is prevented from becoming too low, thereby improving productivity, and the silica particles shrink sufficiently during firing, thereby allowing the specific surface area to be sufficiently small. When the pore volume of the silica precursor is within the above range, even when the particles are heated in a state of being in contact with each other during firing, the particles are not strongly bonded to each other, and spherical particles can be obtained. The pore volume is more preferably 0.3 ml/g or more, still more preferably 0.6 ml/g or more, and particularly preferably 0.7 ml/g or more, and is more preferably 1.8 ml/g or less, still more preferably 1.5 ml/g or less, and particularly preferably 1.2 ml/g or less.

<Average Pore Diameter of Silica Precursor>

In Present Production Method 1, Present Production Method 2 and Present Production Method 3, an average pore diameter of the silica precursor is preferably 1.0 nm to 50.0 nm. When the average pore diameter is 1.0 nm or more, inside of the particles can be made uniformly non-porous, no air bubbles remain inside, and the dielectric loss tangent is reduced. When the average pore diameter is 50.0 nm or less, the silica particles can be densified (made to have a lower specific surface area) by firing without any pores remained, and thus, the dielectric loss tangent can be lowered. The average pore diameter is more preferably 2.0 nm or more, still more preferably 3.0 nm or more, and particularly preferably 4.0 nm or more, and more preferably 40.0 nm or less, still more preferably 30.0 nm or less, and particularly preferably 20.0 nm or less.

The pore volume and average pore diameter is obtained by the BJH method based on the nitrogen adsorption method using the specific surface area and pore distribution measuring device (for example, "BELSORP-mini II" manufactured by MicrotracBEL Corp., "TriStar II" manufactured by Micromeritics Instrument Corporation).

<Circularity of Silica Precursor>

In Present Production Method 1, Present Production Method 2 and Present Production Method 3, it is preferable that the silica precursor is spherical and has an average circularity of 0.90 or more. When the average circularity is 0.90 or more, the particles are substantially spherical, so that the specific surface area of the particles can be reduced, and active surfaces are not exposed because protrusions are not chipped by vibration of the particles, so that the silica particles can have a low dielectric constant. The average circularity is more preferably 0.92 or more, particularly preferably 0.95 or more, and most preferably 1.00 since the closer to a perfect sphere the particles are the more desirable it is.

A circularity can be determined by photographing a particle with a scanning electron microscope (for example, JCM-7000 manufactured by JEOL Ltd.), determining an area and a perimeter of the particle using image analysis software, for example, image analysis software attached to a particle image analyzer (for example, Morphologi4 manufactured by Malvern Panalytical Ltd), and applying the results to the following formula for calculation. Note that the average value determined from circularity of 20 particles is taken as an average circularity.

$$\text{Circularity} = \text{perimeter of circle with equal projected area}/\text{perimeter of particle}$$

Perimeter of circle with equal projected area: observing a particle from directly above, obtaining an area of a shadow of the particle reflected on a plane below, and calculating a circle having an area equal to the above area, so as to obtain a length of an outline of the circle

Perimeter of particle: observing the particle from directly above to obtain a length of an outline of the shadow of the particle reflected on the plane below

<Particle Size Distribution of Silica Precursor>

In Present Production Method 1, Present Production Method 2 and Present Production Method 3, a volume-based cumulative 50% particle diameter (D50, hereinafter also simply referred to as "50% particle diameter") of the silica precursor is preferably 1 μm to 500 μm. When the 50% particle diameter (D50) is 1 μm or more, the particles can be made spherical even after firing to reduce the specific surface area, and when D50 is 500 μm or less, it can be easily used as a filler for resin that is easily molded. The 50% particle diameter (D50) is preferably 1 μm or more, more preferably 1.2 μm or

more, and still more preferably 1.5 $\mu$m or more, and is more preferably 100 $\mu$m or less, still more preferably 50 $\mu$m or less, particularly preferably 20 $\mu$m or less, especially more preferably 10 $\mu$m or less, and most preferably 5 $\mu$m or less.

The 50% particle diameter (D50) can be determined by a laser diffraction type particle size distribution measuring device (for example, "MT3300EXII" manufactured by MicrotracBEL Corp.) or a particle size distribution measuring device using an electrical detection method (coulter counter method) (for example, "Multisizer 4e" manufactured by Beckman Coulter, Inc.).

In Present Production Method 1, when the silica precursor is subjected to an ultrasonic treatment as follows, a ratio $D_2/D_1$ of a cumulative 50% particle diameter $D_2$ of the silica precursor after the ultrasonic treatment to a cumulative 50% particle diameter $D_1$ of the silica precursor before the ultrasonic treatment is preferably 0.9 or more. The ultrasonic treatment: distilled water is added to the silica precursor to prepare a 0.05 mass% slurry, followed by subjecting to an ultrasonic dispersion treatment at a frequency of 45 kHz for 2 minutes.

The ratio $D_2/D_1$ indicates a degree to which particles are strongly aggregated together before the firing step, and in Present Production Method 1, when the ratio $D_2/D_1$ is 0.9 or more, the aggregation between the particles of the silica precursor is not too strong, and sintering during firing is unlikely to occur, which is preferable. The ratio $D_2/D_1$ is more preferably 0.95 or more, still more preferably 0.97 or more, and particularly preferably 0.98 or more. Since it is preferable that the 50% particle diameter (D50) of the silica precursor does not change before and after the ultrasonic treatment, an upper limit of $D_2/D_1$ is preferably 1.0.

<Dry Weight Loss of Silica Precursor>

In Present Production Method 1, Present Production Method 2 and Present Production Method 3, it is preferable that the silica precursor preferably has a weight loss ratio of 10% or less when dried at 230°C for 12 hours. When the weight loss ratio is 10% or less, sintering of the particles hardly occurs when the silica precursor is fired in a state where the particles of the silica precursor are in contact with each other, and the spherical silica powder is easily obtained.

The weight loss ratio is more preferably 9% or less, still more preferably 8% or less, and particularly preferably 6% or less, and since it is desirable that the weight does not change even after drying at 230°C for 12 hours, a lower limit thereof is not particularly limited.

<Ignition Loss of Silica Precursor>

In Present Production Method 1, Present Production Method 2 and Present Production Method 3, an ignition loss of the silica precursor is desirably 5.0 mass% to 15.0 mass%. The ignition loss is a sum of a mass of adhering water adhered to the silica precursor and a mass of water generated from condensation of the silanol group contained in the silica precursor, and the silica precursor has an appropriate silanol group, so that the condensation progresses during firing, and the silanol group easily decreases. When the ignition loss is too large, a yield during firing is lowered and productivity deteriorates, and therefore, the ignition loss of the silica precursor is preferably 15.0 mass% or less, more preferably 13.0 mass% or less, and most preferably 12.0 mass% or less. When the ignition loss is too small, the silanol group is likely to remain during firing, and therefore, the ignition loss of the silica precursor is preferably 5.0 mass% or more, more preferably 6.0 mass% or more, and most preferably 7.0 mass% or more.

Here, the ignition loss is determined in accordance with JIS K0067 (1992) as a mass loss when 1 g of the silica precursor is heated and dried at 850°C for 0.5 hours.

<How to Obtain Silica Precursor>

In Present Production Method 1, Present Production Method 2 and Present Production Method 3, the silica precursor may be obtained by production or a commercially available product may be used. A commercially available sodium-containing porous silica may be washed with an acid to adjust the content of sodium contained therein.

Examples of a method for producing the silica precursor include a wet method and a granulation method. The wet method generally refers to a method for producing porous silica using a liquid raw material or a liquid solvent. The granulation method is a method in which silica fine particles are molded into spheres using a binder or the like.

Between the two methods, by using the wet method that can control the particle size distribution and produce spherical particles, there is no need to adjust the shape of the particles by crushing or the like, and no fine particles are mixed therein, and as a result, particles with a small specific surface area are obtained after firing.

Examples of the wet method by which spherical particles can be synthesized include a spraying method and an emulsion gelling method. The spray method is a method in which a silica sol is dried by spray drying to obtain spherical porous particles. In the emulsion gelling method, for example, a dispersed phase containing a silica precursor and a continuous phase are emulsified, and the obtained emulsion is gelled to obtain a spherical silica precursor. As an emulsification method, it is preferable to prepare an emulsion by supplying the dispersed phase containing the silica precursor to the continuous phase through fine pores or a porous film. Accordingly, an emulsion having a uniform liquid droplet diameter is prepared, and as a result, spherical silica having a uniform particle diameter is obtained. Such an emulsification method may be a micromixer method or a film emulsification method. For example, the micromixer method is disclosed in WO2013/062105A.

When a water content of the obtained silica precursor is large and the weight loss ratio when the silica precursor is dried at 230°C for 12 hours is more than 10%, the silica precursor is preferably dried so that the weight reduction ratio becomes 10% or less. Examples of drying means include a spray dryer, static drying in a dryer, and ventilation treatment with dry air.

Furthermore, when the silica precursor is sintered together to form large agglomerates, the agglomerates may be crushed. However, if the sintering is too strong, the particles will not become spherical even after crushing, and spherical particles cannot be obtained by crushing.

(Method for Producing Spherical Silica Powder)

Present Production Method 1 includes firing the silica precursor in a state where the particles thereof are in contact with each other. By firing, the silica precursor is burned to reduce the specific surface area, the amount of silanol groups on the surface, and the dielectric loss tangent. By firing the silica precursor in the state where the particles thereof are in contact with each other, the particles can be arranged in a dense state, and temperature irregularity and time irregularity during firing can be reduced.

Present Production Method 2 includes performing a heat treatment on the silica precursor, and the silica precursor is subjected to the heat treatment at a temperature that satisfies the following Formula (1), assuming the sodium concentration as x (ppm by mass) and the heat treatment temperature as y (°C).

$$-0.97x + 1180 < y < -0.97x + 1310 \qquad (1)$$

In Formula (1), x is in a range of $1 \leq x \leq 300$.

The silica precursor is burned by heat treatment to densify the porous silica, but by performing the heat treatment at a temperature that satisfies Formula (1), non-porous and spherical silica is formed in which the particles are not fused together, and spherical silica particles that have high fluidity and are highly dispersible in a slurry are obtained.

From the viewpoint of reducing the temperature irregularity during firing, the heat treatment temperature y in Formula (1) is more preferably greater than -0.95x + 1180, still more preferably greater than - 0.905x + 1180, and particularly preferably greater than -0.9x + 1180, and is more preferably less than -0.92x + 1300, still more preferably less than -x + 1300, and particularly preferably less than -1.5x + 1300.

In Present Production Method 2, the sodium concentration x is preferably 200 ppm by mass or less, more preferably less than 200 ppm by mass, still more preferably 100 ppm by mass or less, and particularly preferably 50 ppm by mass or less, and is preferably 2 ppm by mass or more, more preferably 3 ppm by mass or more, and still more preferably 10 ppm by mass or more.

In Present Production Method 2, it is preferable that x is in a range of $0 \leq x < 200$ and the heat treatment temperature y satisfies the following Formula (2).

$$-0.9x + 1180 < y < -1.5x + 1300 \qquad (2)$$

By performing the heat treatment at a temperature that satisfies Formula (2), spherical silica particles having an even lower dielectric loss tangent can be obtained.

Present Production Method 3 includes firing the silica precursor. By firing, the silica precursor is burned to reduce the specific surface area, the amount of silanol groups on the surface, and the dielectric loss tangent.

<Firing Method>

In Present Production Method 1, Present Production Method 2 and Present Production Method 3, a firing method is not particularly limited, and examples thereof include heat treatment with leaving to stand, heat treatment by a rotary furnace, and heat treatment by spray combustion. For the heat treatment with leaving to stand, a stationary electric furnace, a roller hearth kiln, a continuous furnace classified as a tunnel furnace, or the like can be used. For the heat treatment by a rotary furnace, a horizontal rotary furnace (rotary kiln), a rotary tubular furnace, or the like can be used. Among these, from the viewpoint of uniformity of firing, it is preferable to fire by heat treatment using a continuous furnace or a rotary furnace.

In Present Production Method 3, by using the silica precursor, spherical particles can be obtained even when the particles are heated in a state of being in contact with each other.

Among these, from the viewpoint of uniformity of firing, in Present Production Method 1 and Present Production Method 3, firing is preferably performed by at least one heat treatment of the heat treatment with leaving to stand or the heat treatment by a rotary furnace. In Present Production Method 2, the firing is preferably performed by at least one heat treatment selected from the group consisting of a heat treatment with leaving to stand, a heat treatment by a rotary furnace, and a heat treatment by spray combustion.

<Firing Temperature>

In Present Production Method 1, Present Production Method 2 and Present Production Method 3, a firing temperature is preferably 700°C or higher, more preferably 800°C or higher, still more preferably 900°C or higher, and particularly preferably 1000°C or higher. When the temperature becomes too high, the particles are likely to be strongly sintered and a particle gauge in a resin composition becomes large, and thus, the temperature is preferably 1600°C or lower, more preferably 1500°C or lower, and still more preferably 1400°C or lower. That is, the firing temperature is preferably in a range of 700 °C to 1600°C.

<Firing Time>

In Present Production Method 1, Present Production Method 2 and Present Production Method 3, a firing time may be appropriately adjusted depending on a firing apparatus used and the firing time, and for example, is preferably 0.5 hours to 50 hours, and more preferably 1 hour to 10 hours.

<Firing Atmosphere>

In Present Production Method 1, Present Production Method 2 and Present Production Method 3, an atmosphere during firing may be either an oxygen-containing atmosphere or an oxygen-free atmosphere. In the case of forming spheres by a wet method, an organic substance such as an emulsion is often used, and thus, the organic substance often remains in the silica precursor. When a silica precursor containing a small amount of organic substances is fired, the organic substances are carbonized under a condition with a small amount of oxygen, causing an increase in the dielectric loss tangent or coloring. Accordingly, when the silica precursor contains an organic substance, firing is preferably performed in an oxygen-containing atmosphere, and more preferably in the air.

<Crushing>

In Present Production Method 1, Present Production Method 2 and Present Production Method 3, the particles of the spherical silica powder may be weakly sintered together after firing, and thus, in that case, the spherical silica powder may be crushed. In order to maintain the sphericity and specific surface area, crushing is preferably performed such that an average circularity of the particles does not fall below 0.90 so as not to impair effects of the present invention. It is preferable that the specific surface area is not increased by the crushing treatment. A large increase in the specific surface area by the crushing treatment means that some of the spherical particles are crushed and fine damage occurs on the surface to generate a fine powder. The increase in the specific surface area is not preferable because this increase leads to an increase in viscosity when the powder is dispersed in resin and leads to deterioration in the dielectric loss tangent.

The crushing can be performed using a crushing device such as a cyclone mill or a jet mill, or can also be performed using a vibrating sieve.

<Surface Treatment>

In Present Production Method 1, Present Production Method 2 and Present Production Method 3, the spherical silica powder obtained by firing may be subjected to a surface treatment with a silane coupling agent. By this step, the silanol group, which is present on the surface of the spherical silica powder, and the silane coupling agent react with each other, the silanol group on the surface is decreased, and the dielectric loss tangent is kept low. Since the surface of the particles is hydrophobized and affinity for resin is improved, the dispersibility in resin is improved.

Conditions for the surface treatment are not particularly limited, and general surface treatment conditions may be used, and a wet treatment method or a dry treatment method may be used. From the viewpoint of performing a uniform treatment, a wet treatment method is preferable.

<Silane Coupling Agent>

Examples of the silane coupling agent used in the surface treatment include aminosilane coupling agents, epoxysilane coupling agents, mercaptosilane coupling agents, silane-based coupling agents, and organosilazane compounds. These may be used alone or in combination of two or more kinds thereof.

Specifically, examples of a surface treatment agent include an aminosilane coupling agent such as aminopropylmethoxysilane, aminopropyltriethoxysilane, ureidopropyltriethoxysilane, N-phenylaminopropyltrimethoxysilane, and N-2(aminoethyl)aminopropyltrimethoxysilane, an epoxysilane coupling agent such as glycidoxypropyltrimethoxysilane, glycidoxypropyltriethoxysilane, glycidoxypropylmethyldiethoxysilane, glycidylbutyltrimethoxysilane, and (3,4-epoxycyclohexyl)ethyltrimethoxysilane, a mercaptosilane coupling agent such as mercaptopropyltrimethoxysilane and mercaptopropyltriethoxysilane, a silane coupling agent such as methyltrimethoxysilane, vinyltrimethoxysilane, octadecyltrimethoxysilane, phenyltrimethoxysilane, methacroxypropyltrimethoxysilane, imidazolesilane, triazinesilane, a fluorine-containing silane coupling agent such as $CF_3(CF_2)_7CH_2CH_2Si(OCH_3)_3$, $CF_3(CF_2)_7CH_2CH_2SiCl_3$, $CF_3(CF_2)_7CH_2CH_2Si(CH_3)(OCH_3)_2$, $CF_3(CF_2)_7CH_2CH_2Si(CH_3)Cl_2$, $CF_3(CF_2)_5CH_2CH_2SiCl_3$, $CF_3(CF_2)_5CH_2CH_2Si(OCH_3)_3$, $CF_3CH_2CH_2SiCl_3$, $CF_3CH_2CH_2Si(OCH_3)_3$, $C_8F_{17}SO_2N(C_3H_7)CH_2CH_2CH_2Si(OCH_3)_3$, $C_7F_{15}CONHCH_2CH_2CH_2Si(OCH_3)_3$, $C_8F_{17}CO_2CH_2CH_2CH_2Si(OCH_3)_3$, $C_8F_{17}$-O-$CF(CF_3)CF_2$-O-$C_3H_6SiCl_3$, $C_3F_7$-O-$(CF(CF_3)CF_2$-O$)_2$-$CF(CF_3)CONH$-$(CH_2)_3Si(OCH_3)_3$, and an organosilazane compounds such as hexamethyldisilazane, hexaphenyldisilazane, trisilazane, cyclotrisilazane, and 1,1,3,3,5,5-hexamethylcyclotrisilazane.

<Treatment Amount>

A treatment amount of the silane coupling agent is preferably 0.01 parts by mass or more, more preferably 0.02 parts by mass or more, and still more preferably 0.10 parts by mass or more, and is preferably 5 parts by mass or less, and more preferably 2 parts by mass or less with respect to 100 parts by mass of the spherical silica powder. That is, the treatment amount of the silane coupling agent is preferably in a range of 0.01 part by mass to 5 parts by mass with respect to 100 parts by mass of the spherical silica powder.

Examples of the method for treating with the silane coupling agent include a dry method in which the silane coupling agent is sprayed to the spherical silica powder, and a wet method in which the spherical silica powder is dispersed in a solvent and then a silane coupling agent is added to react with the mixture.

Note that it can be confirmed by detection of a peak of a substituent group of the silane coupling agent using IR that the surface of the spherical silica powder is treated with a silane coupling agent. An adhesion amount of the silane coupling agent can be measured by an amount of carbon.

The spherical silica powder obtained by Present Production Method 1, Present Production Method 2 and Present Production Method 3 is amorphous solid silica.

(Physical Properties of Spherical Silica Powder)

<Particle Size Distribution D50>

The spherical silica powder obtained by Present Production Method 1, Present Production Method 2 and Present Production Method 3 preferably has a 50% particle diameter (D50) of 1 μm or more. When the 50% particle diameter (D50) is 1 μm or more, the dielectric loss tangent can be significantly reduced. When the 50% particle diameter (D50) becomes too large, a value of a particle gauge becomes large, and thus, when a resin composition containing the spherical silica powder is formed into, for example, a sheet, a minimum thickness of the sheet becomes large, and therefore, the 50% particle diameter (D50) is preferably 500 μm or less. The 50% particle diameter (D50) is more preferably 1.2 μm or more, and particularly preferably 1.5 μm or more, and is more preferably 100 μm or less, still more preferably 50 μm or less, particularly preferably 20 μm or less, especially preferably 10 μm or less, and most preferably 5 μm or less. That is, the 50% particle diameter (D50) of the spherical silica powder is preferably in a range of 1 μm to 500 μm.

<Maximum Particle Diameter Dmax>

A volume-based maximum particle diameter (Dmax) of the spherical silica powder obtained by Present Production Method 1, Present Production Method 2 and Present Production Method 3 is preferably 150 times or less, more preferably 100 times or less, still more preferably 50 times or less, and particularly preferably 10 times or less, of the 50% particle diameter (D50). When the maximum particle diameter (Dmax) is 150 times or less of the 50% particle diameter (D50), it is difficult to cause defects when the sheet is processed. The maximum particle diameter (Dmax) is preferably 1.2 times or more, more preferably 1.5 times or more, and still more preferably 2 times or more of the 50% particle diameter (D50). That is, the maximum particle diameter (Dmax) of the spherical silica powder is preferably in a range of 1.2 to 150 times of the 50% particle diameter (D50).

<Number of Coarse Particles>

In Present Production Method 1, Present Production Method 2 and Present Production Method 3, the silica precursor may be sintered together by firing the silica precursor. A greater number ratio of particles having a particle diameter of A μm or more in the fired silica particles than the number ratio of particles having a particle diameter of A μm or more estimated from the particle size distribution of the silica precursor indicates that the particles are firmly sintered together, and when dispersed in resin, the particles behave as coalesced coarse particles rather than as spherical particles, which can cause an increase in the viscosity of the resin and surface defects.

In Present Production Method 1, Present Production Method 2 and Present Production Method 3, particularly in the case of a spherical silica powder having a 50% particle diameter (D50) of 5 μm or less, it is preferable that the number ratio of particles of 10 μm or more is in a range of less than 3000 ppm by number. In a spherical silica powder having a 50% particle diameter (D50) of 5 μm or less, when the number ratio of particles having a diameter of 10 μm or more is less than 3000 ppm by number, there is almost no coarse particles, and defects in the thin sheet can be reduced. The number ratio of particles having a diameter of 10 μm or more is more preferably 2000 ppm by number or less, still more preferably 1000 ppm by number or less, and particularly preferably 500 ppm by number or less.

The 50% particle diameter (D50) and the maximum particle diameter (Dmax) can be measured by the above-mentioned electrical detection method (coulter counter method), and the number ratio of particles can be calculated from the measured particle size distribution.

<Specific Surface Area>

A specific surface area of the spherical silica powder obtained by Present Production Method 1, Present Production Method 2 and Present Production Method 3 is preferably 4.0 $m^2$/g or less. When the specific surface area is 4.0 $m^2$/g or less, an increase in viscosity when made into a slurry can be prevented, and the dielectric loss tangent can also be made small. When the specific surface area is 0.2 $m^2$/g or more and the spherical silica powder is contained in a resin composition, contact points with the resin are sufficient, so that the spherical silica powder is compatible with the resin, which is preferable, and it is practically difficult to obtain particles having a specific surface area of less than 0.2 $m^2$/g. The specific surface area is more preferably 3.5 $m^2$/g or less, still more preferably 3.0 $m^2$/g or less, and particularly preferably 2.0 $m^2$/g or less. That is, the specific surface area is preferably in a range of 0.2 $m^2$/g to 4.0 $m^2$/g.

The specific surface area can be measured by the same method as described above.

<Product A × D50 of Specific Surface Area A and 50% Particle Diameter D50>

The specific surface area also correlates with the particle diameter, and generally, the smaller the particle diameter, the larger the specific surface area. It is preferable that the spherical silica powder obtained by Present Production Method 1, Present Production Method 2 and Present Production Method 3 has a product A × D50 of the specific surface area A ($m^2$/g) and the 50% particle diameter D50 (μm) of 20 μm·$m^2$/g or less. When the product A × D50 is 20 μm·$m^2$/g or less, the increase in viscosity when made into a slurry can be reduced more than when particles of the same particle diameter are used, and the dielectric loss tangent can be reduced. The product A × D50 is more preferably 10 μm·$m^2$/g or less, and still more preferably 5 μm·$m^2$/g or less. A theoretical value of the product A × D50 is 2.7 μm·$m^2$/g [derived from the specific surface area = 6/(silica true density 2.2 (g/$cm^3$) × 50% particle diameter (D50) (μm))], and values below the theoretical value are practically unattainable. That is, the product A × D50 is preferably in a range of 2.7 μm·$m^2$/g to 20 μm·$m^2$/g.

<Circularity>

An average circularity of the spherical silica powder obtained by Present Production Method 1, Present Production Method 2 and Present Production Method 3 is preferably 0.90 or more. When the average circularity is 0.90 or more, the particles are substantially spherical, so that the specific surface area of the particles can be reduced, and active surfaces are not exposed because protrusions are not chipped by vibration of the particles, so that the silica particles can have a low dielectric constant. The average circularity is more preferably 0.92 or more, still more preferably 0.93 or more, particularly preferably 0.95 or more, and most preferably 1.00 since the closer to a perfect sphere the particles are the more desirable it is.

The average circularity can be calculated in the same manner as described above.

<Dielectric Loss Tangent>

The spherical silica powder obtained by Present Production Method 1, Present Production Method 2 and Present Production Method 3 preferably has a dielectric loss tangent at a frequency of 1 GHz of 0.0020 or less , more preferably 0.0010 or less, still more preferably 0.0008 or less, particularly preferably 0.0007 or less, especially preferably 0.0006 or less, and most preferably 0.0005 or less. Especially, in the measurement of the dielectric loss tangent and the dielectric constant of the powder, if the frequency is 10 GHz or more, a sample space becomes small and a measurement accuracy deteriorates, and thus, values measured at the frequency of 1 GHz are used in the present invention. When the dielectric loss tangent at the frequency of 1 GHz of the spherical silica powder is 0.0020 or less, an excellent reduction effect of dielectric loss can be obtained, and thus, a substrate or sheet having improved high-frequency characteristics can be obtained. As the dielectric loss tangent is smaller, a transmission loss of a circuit is reduced, and thus, a lower limit value thereof is not particularly limited.

The dielectric loss tangent can be measured by a perturbation resonator method using a dedicated device (for example, "vector network analyzer E5063A" manufactured by KEYCOM Corp.).

<Viscosity of Kneaded Product>

The spherical silica powder obtained by Present Production Method 1, Present Production Method 2 and Present Production Method 3 preferably has a viscosity, which is measured by the following measuring method, of 5000 mPa·s or less in a kneaded product containing the spherical silica powder.

(Measuring Method)

A kneaded product obtained by mixing 8 parts by mass of the spherical silica powder and 6 parts by mass of boiled linseed oil specified by JIS K 5421:2000 and kneading the mixture at 2000 rpm for 3 minutes is measured for 30 seconds at a shear speed of $1 \text{ s}^{-1}$ using a rotary rheometer, and a viscosity at 30 seconds is obtained.

When the viscosity at the shear speed of $1 \text{ s}^{-1}$ of the kneaded product obtained by the above measuring method is 5000 mPa·s or less, an amount of a solvent added during molding or film formation of a resin composition containing the spherical silica powder can be reduced, a drying rate can be increased, and productivity can be improved. When a specific surface area of a silica powder according to a particle diameter thereof increases, a viscosity tends to increase when the silica powder is added to a resin composition, but the spherical silica powder of the present invention can prevent an increase in viscosity of the resin composition since the specific surface area thereof is small. The viscosity of the kneaded product is more preferably 4000 mPa·s or less, and still more preferably 3500 mPa·s or less.

A lower limit value of the viscosity of the kneaded product at the shear rate of $1 \text{ s}^{-1}$ is not particularly limited because the lower the viscosity, the better a coating ability of the resin composition and the higher the productivity.

<IR Peak Intensity>

An IR peak intensity in the vicinity of 3746 $\text{cm}^{-1}$, which is derived from isolated silanol groups on the surface of the spherical silica powder obtained by Present Production Method 1, Present Production Method 2 and Present Production Method 3, is preferably 0.1 or less, more preferably 0.08 or less, and still more preferably 0.06 or less. The isolated silanol group is a silanol (Si-OH) group that is not bonded to water or the like adsorbed to the silica particles. An amount of the isolated silanol (Si-OH) groups on the surface of the silica particles is obtained by IR measurement. Specifically, an IR spectrum is normalized at 800 $\text{cm}^{-1}$ and a base line is aligned at 3800 $\text{cm}^{-1}$, and then a relative value of the Si-OH peak intensity in the vicinity of 3746 $\text{cm}^{-1}$ is obtained. When the number of isolated silanol groups on the particle surface is large, the dielectric loss tends to increase when the member mixed with the resin is used for electronic applications, and when the IR peak intensity in the vicinity of 3746 $\text{cm}^{-1}$, which is derived from the isolated silanol groups on the particle surface, is 0.1 or less, the dielectric loss can be reduced.

A maximum IR peak intensity at 3300 $\text{cm}^{-1}$ to 3700 $\text{cm}^{-1}$, which is derived from the bonded silanol groups on the surface of the spherical silica powder obtained by Present Production Method 1, Present Production Method 2 and Present Production Method 3, is preferably 0.2 or less, more preferably 0.17 or less, and still more preferably 0.15 or less. The bonded silanol group is a silanol (Si-OH) group bonded to water adsorbed to the silica particles, or bonded to silanol on the silica surface. An amount of the bonded silanol (Si-OH) groups on the surface of the silica particles is obtained by IR measurement. Specifically, the IR spectrum is normalized at 800 $\text{cm}^{-1}$, the base line is aligned at 3800 $\text{cm}^{-1}$, and then a relative value of the bonded Si-OH peak intensity is obtained from the maximum peak at 3300 $\text{cm}^{-1}$ to 3700 $\text{cm}^{-1}$. In the case where the number of bonded silanol groups on the particle surface is large, the dielectric loss tends to increase when the member mixed with the resin is used for electronic applications, and in the case where the maximum IR peak intensity at 3300 $\text{cm}^{-1}$ to 3700 $\text{cm}^{-1}$, which is derived from the bonded silanol groups on the particle surface, is 0.2 or less, the dielectric loss can be reduced.

<Oil Absorption Value>

The spherical silica powder obtained by Present Production Method 1, Present Production Method 2 and Present Production Method 3 is preferably non-porous particles. In the case where the spherical silica particles are porous particles, an oil absorption value increases, the viscosity in resin increases, the specific surface area increases, the amount of silanol (Si-OH) groups on the surface of the silica particles increases, and the dielectric loss tangent tends to deteriorate. Specifically, the oil absorption value is preferably 100 ml/100 g or less, more preferably 70 ml/100 g or less, and most preferably 50 ml/100 g or less. A lower limit value thereof is not particularly limited, but it is substantially difficult to set the oil absorption value to 20 ml/100 g or less. That is, the oil absorption value is preferably in a range of more than 20 ml/100 g and 100 ml/100 g or less.

<Metal Content>

The spherical silica powder obtained by Present Production Method 1 and Present Production Method 3 may include an impurity element as long as the effect of the present invention is not impaired. Examples of the impurity element include Ti, Na, K, Mg, Ca, Al, and Fe.

A content of an alkali metal and an alkaline earth metal in the impurity element is preferably 2000 ppm by mass or less, more preferably 1000 ppm by mass or less, and still more preferably 200 ppm by mass or less in total.

The spherical silica powder obtained by Present Production Method 2 contains sodium in a range of 1 ppm by mass to 300 ppm by mass since the silica precursor as the raw material contains sodium at a concentration of 1 ppm by mass to 300 ppm by mass. The sodium concentration is preferably 2 ppm by mass or more, more preferably 3 ppm by mass or more, and still more preferably 10 ppm by mass or more, and is preferably 200 ppm by mass or less, more preferably less than 200 ppm by mass, still more preferably 150 ppm by mass or less, particularly preferably 100 ppm by mass or less, and most preferably 50 ppm by mass or less.

The spherical silica powder obtained by Present Production Method 2 may include an impurity element other than sodium as long as the effect of the present invention is not impaired. Examples of the other impurity elements include K, Mg, Ca, Al, Fe, and Ti.

A content of an alkali metal and an alkaline earth metal in the impurity elements other than sodium is preferably 1000 ppm by mass or less, more preferably 500 ppm by mass or less, and still more preferably 200 ppm by mass or less in total.

(Resin Composition and Slurry Composition)

<Resin Composition>

The spherical silica powder obtained by Present Production Method 1, Present Production Method 2 and Present Production Method 3 has a small specific surface area, and thus, dispersibility in various solvents is good, and miscibility with a resin composition is excellent.

A resin composition according to the present embodiment includes a spherical silica powder and a resin. A content of the spherical silica powder in the resin composition is preferably 5 mass% to 90 mass%, and more preferably from 10 mass% to 70 mass%.

The resin may use one or two or more kinds of a polyamide such as an epoxy resin, a silicone resin, a phenol resin, a melamine resin, a urea resin, unsaturated polyester, a fluororesin, polyimide, polyamide-imide, or polyether imide; a polyester such as polybutylene terephthalate or polyethylene terephthalate; polyphenylene sulfide, aromatic polyester, polysulfone, a liquid crystal polymer, polyethersulfone, polycarbonate, a maleic imide modified resin, an acrylonitrile butadiene styrene (ABS) resin, an acrylonitrile-acrylic rubber-styrene (AAS) resin, an acrylonitrile-ethylene-propylene-diene rubber-styrene (AES) resin, a poly tetrafluoroethylene (PTFE), a tetrafluoroethylene-perfluoroalkyl vinyl ether copolymer (PFA), a tetrafluoroethylene-hexafluoropropylene copolymer (FEP), and a tetrafluoroethylene-ethylene copolymer (ETFE). Since the dielectric loss tangent in the resin composition also depends on characteristics of the resin, the resin to be used may be selected in consideration of this factor.

<Slurry Composition>

The spherical silica powder obtained by Present Production Method 1, Present Production Method 2 and Present Production Method 3 can also be used as a filler for a slurry composition. The slurry composition refers to a muddy composition in which the spherical silica powder is dispersed in an aqueous or oily medium.

A content of the spherical silica powder in the slurry composition is preferably 1 mass% to 50 mass%, and more preferably 5 mass% to 40 mass%.

Examples of the oily medium include acetone, methanol, ethanol, butanol, 2-propanol, 2-methoxyethanol, 2-ethoxyethanol, 1-methoxy-2-propanol, 2-acetoxy-1-methoxypropane, toluene, xylene, methyl ethyl ketone, N,N-dimethylformamide, methyl isobutyl ketone, N-methylpyrrolidone, n-hexane, cyclohexane, cyclohexanone, and naphtha as a mixture. The above may be used alone or as a mixture of two or more kinds thereof.

The resin composition and the slurry composition may include an optional component other than the resin and the medium. Examples of the optional component include a dispersion aid, a surfactant, and a filler other than silica.

<Resin Film>

When a resin film is produced using the resin composition including the spherical silica powder obtained by Present Production Method 1, Present Production Method 2 and Present Production Method 3, the dielectric loss tangent thereof at a frequency of 10 GHz is preferably 0.012 or less, more preferably 0.010 or less, and still more preferably 0.009 or less. When the dielectric loss tangent at the frequency of 10 GHz of the resin film is 0.012 or less, the resin film can be expected to be used for electronic devices, communication devices, and the like because of excellent electrical characteristics thereof. As the dielectric loss tangent is smaller, a transmission loss of a circuit is reduced, and thus, a lower limit value thereof is not particularly limited.

The dielectric loss tangent can be measured using a split post dielectric resonator (SPDR) (for example, manufactured by Agilent Technologies Japan, Ltd.).

The resin film preferably has an average coefficient of linear expansion of 10 ppm/°C to 50 ppm/°C. When the average coefficient of linear expansion is in the above range, the range is close to a coefficient of thermal expansion of a copper foil widely used as a base material, and thus, the electrical characteristics are excellent. The average coefficient of linear expansion is more preferably 12 ppm/°C or more, still more preferably 15 ppm/°C or more, and more preferably 40 ppm/°C or less, and still more preferably 30 ppm/°C or less.

The average coefficient of linear expansion is determined by heating the resin film at a load of 5 N and a temperature increase rate of 2 °C/min, measuring a dimensional change of a sample from 30°C to 150°C, and calculating an average with using a thermomechanical analyzer (for example, "TMA-60" manufactured by SHIMADZU CORPORATION).

<Applications>

The spherical silica powder obtained by Present Production Method 1, Present Production Method 2 and Present Production Method 3 can be used as cosmetic materials and various fillers, and can be particularly and suitably used as a filler in resin compositions used for production of an electronic substrate used in an electronic device such as a personal computer, a laptop, and a digital camera, and a communication device such as a smartphone and a game console. Specifically, the spherical silica powder is expected to be applied to a resin composition, a prepreg, a metal foil-clad laminate, a printed wiring board, a resin sheet, an adhesive layer, an adhesive film, a solder resist, a bump reflow, a rewiring insulating layer, a die bond material, a sealing material, an underfill, a mold underfill, a laminated inductor, and the like in order to achieve the low dielectric loss tangent, the low transmission loss, the low moisture absorption, and the improved peeling strength.

EXAMPLES

Hereinafter, the present invention will be described with reference to Examples, but the present invention is not limited thereto. In the following description, common components employ the same substance.

In Test Example 1, Examples 11 to 15 are Working Examples.

In Test Example 2, Examples 21 to 31 are Working Examples.

In Test Example 3, Examples 41 to 44 are Working Examples, and Example 45 is a Comparative Example.

<Measuring Method for 50% Particle Diameter (D50) and Maximum Particle Diameter (Dmax) in Test Example 1>

Distilled water was added to the silica precursor/silica powder to prepare a 0.05 mass% slurry, followed by subjecting to treatment with an ultrasonic cleaner at a frequency of 45 kHz for 2 minutes, and the volume-based 50% cumulative particle diameter (50% particle diameter, D50) and the maximum particle diameter (Dmax) were calculated using a laser diffraction particle size distribution measuring device (MT3300EXII, manufactured by MicrotracBEL Corp.).

To show a degree of aggregation of the silica precursor, the 0.05 mass% slurry of the silica precursor was dispersed and treated in the ultrasonic cleaner at a frequency of 45 kHz for 2 minutes, and the 50% particle diameter (D50) thereof was calculated in the same manner, and a ratio of $D_2/D_1$ of a 50% particle diameter $D_2$ of the silica precursor after the ultrasonic treatment to a 50% particle diameter $D_1$ of the silica precursor before the ultrasonic treatment was obtained.

<Measuring Method for 50% Particle Diameter (D50) and Ratio of Particles of 10 $\mu$m or More in Test Example 2 and Test Example 3>

Distilled water was added to the silica powder to prepare a 0.05 mass% slurry, followed by subjecting to treatment with an ultrasonic cleaner at a frequency of 45 kHz for 2 minutes, and a particle size distribution measuring device using an electrical detection method (Multisizer 4e manufactured by Beckman Coulter, Inc.) was used to calculate a volume-based 50% cumulative particle diameter (50% particle diameter, D50) and the number ratio of particles of 10 $\mu$m or more (settings: aperture diameter: 50 $\mu$m, effective N number: 50,000, current: 800 $\mu$A, gain: 4, stirring speed: 15, electrolyte: isoton).

<Measuring Method for Average Circularity>

A circularity was determined by photographing a particle with a scanning electron microscope (JCM-7000 manufactured by JEOL Ltd.), determining an area and a perimeter of the particle using image analysis software (image analysis software attached to a particle image analyzer "Morphologi4" manufactured by Malvern Panalytical Ltd), and applying the results to the following formula for calculation. The average value determined from circularity of 20 silica particles was taken as an average circularity.

$$\text{Circularity} = \text{perimeter of circle with equal projected area/perimeter of particle}$$

Perimeter of circle with equal projected area: observing a particle from directly above, obtaining an area of a shadow of the particle reflected on a plane below, and calculating a circle having an area equal to this area, so as to obtain a length of an outline of the circle
Perimeter of particle: observing the particle from directly above to obtain a length of an outline of the shadow of the particle reflected on the plane below
Regarding judgment as to whether a particle is spherical, particles with an average circularity of 0.90 or more were evaluated as being spherical.

<Evaluating Method for Ease of Crushing of Silica Powder>

The silica powder after firing was crushed with fingers and ease of crushing was checked according to the following criteria.

[Evaluation Criteria]

A: It can be easily crushed into a powdery state.
B: It takes time, but it can be crushed until it becomes powdery.
C: It cannot be crushed into a powdery state.

<Measuring Method for Dielectric Loss Tangent>

The dielectric loss tangent was measured by a perturbation resonator method using a dedicated device (vector network analyzer E5063A, manufactured by KEYCOM Corp.) at a test frequency of 1 GHz, a test temperature of approximately 24°C, a humidity of approximately 45%, and for three times. Specifically, the silica powder and polyethylene (PE) powder (FLO-THENE UF-20S manufactured by Sumitomo Seika Chemicals Company, Limited.) were weighed out and mixed in a planetary centrifugal mixer manufactured by Thinky Corporation (ARE-310, rotation speed: 2,000 rpm, treatment time: 3 minutes), so that a filling amount of the silica powder was 40 volume%. The obtained mixed powder was weighed out to a predetermined volume, charged into a mold having a size of 130 mm square $\times$ 0.2 mm thick, and pressed at 185°C under 10 MPa for 3 minutes to produce a pressed sheet. The dielectric loss tangent of the obtained pressed sheet was measured, and then a sheet produced under similar conditions using only polyethylene powder was used as a blank, and the dielectric loss tangent of only the silica powder was obtained by conversion based on a mixing ratio by volume.

<Measuring Method for Sodium (Na) Content>

The Na content was measured by atomic absorption spectrometry. That is, 1 g of the silica powder was dissolved in an acid containing hydrogen fluoride, followed by heating and drying, and further dissolved in nitric acid, and after a volume of the mixture was adjusted to a constant value, absorbance thereof was measured by atomic absorption spectrometry.

<Measuring Method for Specific Surface Area, Pore Volume and Average Pore Diameter >

The silica precursor/silica powder was dried under reduced pressure at 230°C to completely remove water, thereby obtaining a sample. For this sample, the specific surface area was obtained by a multi-point BET method using nitrogen gas by "TriStar II", which is an automatic specific surface area and pore distribution measuring device manufactured by Micromeritics Instrument Corporation, and the pore volume and the average pore diameter were obtained by the BJH method.

Example 1: Preparation of Silica Precursor Slurry

As a dispersed phase, sodium silicate No. 3 (manufactured by AGC Si-Tech Co., Ltd., sodium silicate aqueous solution, $SiO_2/Na_2O$ (molar ratio) = 3, $SiO_2$ concentration = 24 mass%) was used in an amount of 30 g.

A mixture obtained by dissolving 0.7 mass% of sorbitan monooleate (manufactured by Sanyo Chemical Industries, Ltd., IONET S80) as a surfactant in n-decane (manufactured by Tosoh Corporation, HC-250, $C_{10}H_{22}$) in advance was used as a continuous phase in an amount of 150 g.

While stirring the continuous phase, which is the surfactant-containing n-decane, with a homogenizer (manufactured by MICROTEC CO., LTD., Physcotron, generator shaft NS-30UG/20P), the dispersed phase, which is the sodium silicate No. 3, was added and emulsified by stirring at 13,000 rpm for 5 minutes.

While stirring the obtained emulsion using a three-one motor, carbon dioxide gas was blown into the emulsion at a rate of 0.4 L/min for 20 minutes to precipitate silica.

Thereafter, while stirring an aqueous phase containing silica gel, which is obtained by removing an oil phase, at room temperature, sulfuric acid was added until a pH reached 2, and then the mixture was stirred in a warm bath at 80°C for 1 hour to remove residual decane.

<Test Example 1>

(Example 11)

The slurry obtained in Example 1 after removing the residual solvent was filtered and washed by pouring demineralized water heated to 80°C over the slurry at 40 ml/g-$SiO_2$, to obtain a silica cake with a water content of 60 mass%. Then, distilled water was added to this silica cake to prepare a 5 mass% slurry. The resulting slurry was dried with a spray dryer (Mini Spray Dryer B290, manufactured by Nihon BUCHI K.K.) to obtain a silica precursor. Note that when the obtained silica precursor was dried at 230°C for 12 hours, a weight loss ratio thereof was 6.2%.

The obtained silica precursor was placed in an alumina crucible and subjected to a heat treatment in an electric furnace set at 1075°C for 1 hour. After the heat treatment, the silica powder was cooled to room temperature and pressed onto a stainless steel sieve with 150 $\mu$m openings using a rubber spatula to allow the particles to pass through, thereby obtaining a silica powder of Example 1.

After the heat treatment, the silica powder was loosely aggregated, but it was possible to be easily crushed by lightly pressing the powder with a rubber spatula and pass the entire amount through the sieve.

(Example 12)

The same operations as in Example 11 were performed up to filtration and washing of the slurry after removal of the residual solvent obtained in Example 1, and a silica cake having a water content of 60 mass% was obtained, and then the obtained silica cake was shelf-dried at 120°C for 12 hours. Thereafter, an entire amount of the coarsely aggregated silica was passed through a stainless steel sieve with 45 $\mu$m openings while being crushed by a rubber spatula, to obtain a silica precursor. Note that when the obtained silica precursor was dried at 230°C for 12 hours, a weight loss ratio thereof was 2.0%.

The obtained silica precursor was placed in an alumina crucible and subjected to a heat treatment in an electric furnace set at 1240°C for 1 hour. After the heat treatment, the silica precursor was cooled to room temperature, and an entire amount of the coarsely aggregated silica was passed through a stainless steel sieve with 150 $\mu$m openings while

being crushed by a rubber spatula, thereby obtaining a silica powder of Example 12.

(Example 13)

The same operation as in Example 12 was performed except that the shelf drying time was set to 2 hours, a water content of the silica cake was set to 80 mass%, and sieving was not performed, thereby obtaining a silica powder of Example 13.
Note that when the silica precursor after drying was dried at 230°C for 12 hours, a weight loss ratio thereof was 17.7%. In the crushing treatment after firing, silica that did not pass through the sieve remained.

(Example 14)

The same operation as in Example 13 was performed except that the entire amount of the coarsely aggregated silica on the dried silica precursor in Example 13 was passed through a stainless steel sieve with 45 $\mu$m openings while being crushed by a rubber spatula, thereby obtaining a silica powder of Example 14.
Note that when the silica precursor after drying was dried at 230°C for 12 hours, a weight loss ratio thereof was 17.7%. In the crushing treatment after firing, a small amount of silica that did not pass through the sieve remained.

(Example 15)

The same operation as in Example 13 was performed except that distilled water was further added to the silica precursor obtained in Example 13 (weight loss ratio when dried at 230°C for 12 hours: 17.7%) to prepare a 5 mass% slurry, and the obtained slurry was dried with a spray dryer (Mini Spray Dryer B290, manufactured by Nihon BUCHI K.K.), to obtain a silica powder of Example 15.
Note that when the silica precursor dried by the spray dryer was dried at 230°C for 12 hours, a weight loss ratio thereof was 3.5%.
Various measurements were performed on the silica precursors and the silica powders after firing of Examples 11 to 15. Results are shown in Table 1.

[Table 1]

| | | Silica precursor | | | | | |
|---|---|---|---|---|---|---|---|
| | | Water content (wt%) of cake before drying | Drying | Pre-crushing | Weight loss ratio (%) at 230°C | D50 ($\mu$m) | Ultrasonic wave -presence $D_2$ ($\mu$m) | Ultrasonic wave-presence/absence $D_2/D_1$ |
| Example 11 | - | Drying by spray dryer | Absence | 6.2 | 4.1 | 4.0 | 0.98 |
| Example 12 | 60 | Shelf drying (120°C-12 h) | Presence | 2.0 | 4.1 | 4.1 | 0.99 |
| Example 13 | 80 | Shelf drying (120°C-2 h) | Absence | 17.7 | 22.1 | 4.3 | 0.20 |
| Example 14 | 80 | Shelf drying (120°C-2 h) | Presence | 17.7 | 4.5 | 4.0 | 0.87 |
| Example 15 | - | Shelf drying (120°C-2 h) →reslurrying →drying by spray dryer | Absence | 3.5 | 4.0 | 4.0 | 1.00 |

[Table 1] (continued)

| | Firing environment | Firing temperature (°C) | Fired silica | | | | | | |
| --- | --- | --- | --- | --- | --- | --- | --- | --- | --- |
| | | | Specific surface area (m²/g) | Average circularity | Ease of crushing | D50 (μm) | Dmax (μm) | Remaining on sieve | Dielectric loss tangent |
| Example 11 | Leaving to stand | 1075 | 1.4 | 0.99 | A | 3.1 | 15.6 | Absence | 0.0004 |
| Example 12 | Leaving to stand | 1240 | 1.2 | 0.99 | A | 3.2 | 18.5 | Absence | 0.0004 |
| Example 13 | Leaving to stand | 1240 | 1.4 | 0.88 | C | 3.4 | 352.0 | Presence | 0.00062 |
| Example 14 | Leaving to stand | 1240 | 1.3 | 0.98 | B | 3.2 | 104.7 | Presence | 0.0004 |
| Example 15 | Leaving to stand | 1240 | 1.3 | 0.99 | A | 3.2 | 22.0 | Absence | 0.0004 |

The spherical silica powders of Examples 11 to 15 all had a small specific surface area and a small dielectric loss tangent, and the method of the present invention provided a spherical silica powder with a low dielectric constant.

<Test Example 2>

(Example 21)

The slurry obtained in Example 1 after removing the residual solvent was filtered and washed by pouring acidic demineralized water of 40 ml/g-SiO$_2$ that was adjusted to pH 1 with sulfuric acid on the slurry in order to adjust the sodium (Na) content, and then filtered and washed using demineralized water heated to 80°C until the pH of the wash liquid reached 5 or more. The resulting slurry was dried with a spray dryer (Mini Spray Dryer B290, manufactured by Nihon BUCHI K.K.) to obtain a silica precursor. A sodium concentration of the silica precursor was measured and found to be 12 ppm by mass.

The obtained silica precursor was placed in an alumina crucible and subjected to a heat treatment in an electric furnace at 1280°C for 1 hour. In order to know thermal history during the heat treatment, a referthermo (a molded ceramic powder that shrinks precisely in response to the thermal history) was placed in the same electric furnace. A temperature indicated by the referthermo was 1266°C.

The silica powder after the heat treatment was cooled to room temperature, and the coarsely aggregated silica was passed through a stainless steel sieve with 150 μm openings while being crushed by a rubber spatula, and undersize particles were collected, thereby obtaining a silica powder of Example 21.

(Examples 22 to 24)

Silica precursors were obtained by the same operation as in Example 21, and then the same operation as in Example 21 was performed except that the heat treatment was performed at the temperatures shown in Table 2, thereby obtaining silica powders of Examples 22 to 24.

(Examples 25 to 27)

The same operation as in Example 21 was performed except that during filtration and washing for adjusting the sodium (Na) content in Example 21, 250 ml/g-SiO$_2$ of demineralized water heated to 80°C was poured instead of the acidic demineralized water, and that the heat treatment was performed at the temperatures shown in Table 2, thereby obtaining silica powders of Examples 25 to 27.

(Examples 28 and 29)

The same operation as in Example 21 was performed except that during filtration and washing for adjusting the sodium (Na) content in Example 21, 40 ml/g-SiO$_2$ of demineralized water heated to 80°C was poured instead of the acidic demineralized water, and that the heat treatment was performed at the temperatures shown in Table 2, thereby obtaining silica powders of Examples 28 and 29.

(Examples 30 and 31)

The same operation as in Example 21 was performed except that the slurry after removal of the residual solvent produced as in Example 21 was filtered and washed with drinking water heated to 80°C until the pH of the wash liquid reached 5 or more, and that the heat treatment was performed at the temperatures shown in Table 2, thereby obtaining silica powders of Examples 30 and 31.

Various measurements were performed on the silica precursors and the silica powders after firing of Examples 21 to 31. Results are shown in Table 2.

Table 2 also shows whether the heat treatment temperature (firing temperature) of the silica precursor satisfies Formula (1): $-0.97x + 1180 < y < -0.97x + 1310$ ($1 \leq x \leq 300$) and Formula (2): $-0.9x + 1180 < y < -1.5x + 1300$ ($1 \leq x < 200$), where x (ppm by mass) represents the sodium concentration of the silica precursor and y (°C) represent the heat treatment temperature.

[Table 2]

| | | Raw material silica | | | Firing temperature (°C) = y | Temperature (°C) indicated by referthermo | Formula (1): $-0.97x + 1180 < y < -0.97x + 1310$ | Formula (2): $-0.9x + 1180 < y < -1.5x + 1300$ |
|---|---|---|---|---|---|---|---|---|
| | Na content (ppm by mass) = x | Specific surface area (m$^2$/g) | Average pore diameter (nm) | Pore volume (ml/g) | | | | |
| Example 21 | 12 | 717 | 4.3 | 0.8 | 1280 | 1266 | Corresponding | Corresponding |
| Example 22 | 12 | 717 | 4.3 | 0.8 | 1211 | 1195 | Corresponding | Corresponding |
| Example 23 | 12 | 717 | 4.3 | 0.8 | 1191 | 1174 | Corresponding | Corresponding |
| Example 24 | 12 | 717 | 4.3 | 0.8 | 1181 | 1160 | Corresponding | Corresponding |
| Example 25 | 63 | 695 | 4.5 | 0.8 | 1211 | 1194 | Corresponding | Not corresponding |
| Example 26 | 63 | 695 | 4.5 | 0.8 | 1181 | 1163 | Corresponding | Corresponding |
| Example 27 | 63 | 695 | 4.5 | 0.8 | 1151 | 1134 | Corresponding | Corresponding |
| Example 28 | 132 | 755 | 4.8 | 0.9 | 1115 | 1100 | Corresponding | Not corresponding |
| Example 29 | 132 | 755 | 4.8 | 0.9 | 1076 | 1065 | Corresponding | Corresponding |
| Example 30 | 200 | 705 | 4.0 | 0.7 | 1076 | 1065 | Corresponding | Not corresponding |
| Example 31 | 200 | 705 | 4.0 | 0.7 | 1011 | 1007 | Corresponding | Not corresponding |

[Table 2] (continued)

| | Fired silica | | | | | |
|---|---|---|---|---|---|---|
| | Specific surface area (m$^2$/g) | Ease of crushing | Average circularity | D50 (μm) | Number ratio (ppm by number) of particles of 10 μm or more | Dielectric loss tangent |
| Example 21 | 1.2 | A | 0.99 | 3.2 | 320 | 0.00039 |
| Example 22 | 1.4 | A | 0.99 | 3.2 | 209 | 0.00028 |
| Example 23 | 1.3 | A | 0.99 | 3.4 | 323 | 0.00045 |
| Example 24 | 1.7 | A | 0.99 | 3.2 | 152 | 0.00057 |
| Example 25 | 1.2 | B | 0.98 | 4.0 | 577 | 0.00040 |
| Example 26 | 1.4 | A | 0.99 | 3.4 | 200 | 0.00046 |
| Example 27 | 1.4 | A | 0.99 | 3.3 | 160 | 0.00050 |
| Example 28 | 1.3 | B | 0.98 | 3.5 | 510 | 0.00052 |
| Example 29 | 1.4 | A | 0.99 | 3.2 | 79 | 0.00039 |
| Example 30 | 1.2 | A | 0.99 | 3.5 | 357 | 0.00070 |
| Example 31 | 1.4 | A | 0.99 | 3.9 | 260 | 0.00060 |

The spherical silica powders of Examples 21 to 31 all had a dielectric loss tangent of 0.0010 or less, which means that dielectric constants thereof were reduced, and spherical silica particles with a sufficiently small dielectric loss tangent could be produced.

<Test Example 3>

(Example 41)

A silica powder of Example 41 was obtained in the same manner as in Example 11.

(Example 42)

To the slurry after removing the residual solvent obtained in Example 1, an aqueous sodium hydroxide solution was further added until the pH reached 9, and the mixture was aged in a warm bath at 90°C for 1 hour with stirring. Otherwise, the same operation as in Example 41 was performed to obtain a silica powder of Example 42.

(Example 43)

The same operation as in Example 41 was performed to obtain a silica powder of Example 43, except that as a dispersed phase, 30 g of a mixture obtained by diluting sodium silicate No. 3 (manufactured by AGC Si-Tech Co., Ltd., sodium silicate aqueous solution, $SiO_2/Na_2O$ (molar ratio) = 3, $SiO_2$ concentration = 24 mass%) with water to prepare an aqueous solution with a $SiO_2$ concentration of 11 mass%, followed mixing with sodium chloride at 30 mass% relative to the weight of $SiO_2$ was used, and in order to make the average particle diameter the same as in Examples 41 and 42, the rotation speed during stirring and emulsification was set to 10,000 rpm.
When the obtained spherical silica powder was evaluated for texture after firing, it was found to have a slight roughness, but a pretreatment by an ultrasonic treatment before the particle size distribution measurement, but some of the particles was loosened to a powdery state, allowing measurement without blocking a 50 μm aperture.

(Example 44)

The aging step as in Example 42 was added to the operation in Example 43. Otherwise, the same operation as in Example 43 was performed to obtain a silica powder of Example 44.

(Example 45)

A commercially available silica gel (KANTO CHEMICAL CO.,INC., white silica gel small granules) was crushed in a mortar and classified to obtain crushed silica having an average particle diameter of 43 μm, which was used as a silica precursor.

The same firing and crushing treatments as in Example 41 were performed, but the resulting particles were strongly aggregated and all amount of the particles did not pass through the sieve.

Various measurements were performed on the silica precursors and the silica powders after firing of Examples 41 to 45. Results are shown in Table 3.

[Table 3]

| | Silica precursor | | | | | |
|---|---|---|---|---|---|---|
| | Average circularity | Specific surface area ($m^2$/g) | Average pore diameter (nm) | Pore volume (ml/g) | D50 (μm) | Number ratio (ppm by number) of particles of 10 μm or more |
| Example 41 | 0.99 | 755 | 4.8 | 0.9 | 3.6 | 95 |
| Example 42 | 0.99 | 245 | 15.5 | 1.0 | 3.2 | 116 |
| Example 43 | 0.99 | 780 | 7.7 | 1.5 | 3.4 | 103 |
| Example 44 | 0.99 | 230 | 33.0 | 1.9 | 3.5 | 68 |
| Example 45 | 0.72 | 250 | 12.8 | 0.8 | 3.1 | 320 |

[Table 3] (continued)

| | Firing conditions | Fired silica | | | | |
|---|---|---|---|---|---|---|
| | | Ease of crushing | Average circularity | Specific surface area ($m^2$/g) | Number ratio (ppm by number) of particles of 10 μm or more | Dielectric loss tangent |
| Example 41 | 1075°C, 1 h | A | 0.99 | 1.4 | 79 | 0.0004 |
| Example 42 | 1075°C, 1 h | A | 0.99 | 1.4 | 130 | 0.0008 |
| Example 43 | 1075°C, 1 h | B | 0.99 | 1.2 | 1207 | 0.0015 |
| Example 44 | 1075°C, 1 h | B | 0.99 | 1.3 | 1623 | 0.0019 |
| Example 45 | 1075°C, 1 h | C | 0.68 | 6 | Not measurable | Not measurable |

From the results in Table 3, the spherical silica powders of Examples 41 to 44 had a dielectric loss tangent of 0.0020 or less, and were low in dielectric constant. On the other hand, in Example 45, the particles after firing were strongly aggregated and could not be crushed, so that the dielectric loss tangent could not be measured.

Although the present invention has been described in detail with reference to specific embodiments, it is apparent to those skilled in the art that various changes and modifications can be made without departing from the spirit and scope of the present invention. The present application is based on Japanese Patent Applications (No. 2022-095197, No. 2022-095198 and No. 2022-095199) filed on June 13, 2022, the contents of which are incorporated herein by reference.

Claims

1. A method for producing a spherical silica powder, the method comprising:
   firing a spherical and porous silica precursor in a state where particles of the silica precursor are in contact with each other.

2. The method for producing a spherical silica powder according to claim 1, wherein

when the silica precursor is subjected to an ultrasonic treatment as follows, a ratio $D_2/D_1$ of a volume-based cumulative 50% particle diameter $D_2$ of the silica precursor after the ultrasonic treatment to a volume-based cumulative 50% particle diameter $D_1$ of the silica precursor before the ultrasonic treatment is 0.9 or more, and in the ultrasonic treatment, distilled water is added to the silica precursor to prepare a 0.05 mass% slurry, followed by subjecting to an ultrasonic dispersion treatment at a frequency of 45 kHz for 2 minutes.

3. The method for producing a spherical silica powder according to claim 1 or 2, wherein the silica precursor has a weight loss ratio of 10% or less when dried at 230°C for 12 hours.

4. The method for producing a spherical silica powder according to any one of claims 1 to 3, wherein the silica precursor is fired by at least one heat treatment of a heat treatment with leaving to stand or a heat treatment by a rotary furnace.

5. A method for producing a spherical silica powder, the method comprising:

performing a heat treatment on a spherical and porous silica precursor, wherein
the silica precursor has a sodium concentration of 1 ppm by mass to 300 ppm by mass, and
assuming the sodium concentration as x (ppm by mass) and a heat treatment temperature as y (°C), the silica precursor is subjected to the heat treatment at a temperature satisfying -0.97x + 1180 < y < -0.97x + 1310.

6. The method for producing a spherical silica powder according to claim 5, wherein the silica precursor has a sodium concentration of 1 ppm by mass to 200 ppm by mass.

7. The method for producing a spherical silica powder according to claim 5 or 6, wherein the silica precursor is fired by at least one heat treatment selected from the group consisting of a heat treatment with leaving to stand, a heat treatment by a rotary furnace, and a heat treatment by spray combustion.

8. The method for producing a spherical silica powder according to any one of claims 5 to 7, wherein the silica precursor is fired in a state where particles of the silica precursor are in contact with each other.

9. A method for producing a spherical silica powder, the method comprising:

firing a spherical and porous silica precursor, wherein
the silica precursor has a pore volume of 0.1 ml/g to 2.0 ml/g and a specific surface area of 200 $m^2$/g to 1000 $m^2$/g.

10. The method for producing a spherical silica powder according to claim 9, wherein the silica precursor has an average pore diameter of 1.0 nm to 50.0 nm.

11. The method for producing a spherical silica powder according to claim 9 or 10, wherein the silica precursor has an average circularity of 0.90 or more.

12. The method for producing a spherical silica powder according to any one of claims 9 to 11, wherein the silica precursor is fired in a state where particles of the silica precursor are in contact with each other.

13. The method for producing a spherical silica powder according to any one of claims 9 to 12, wherein the silica precursor is fired by at least one heat treatment of a heat treatment with leaving to stand or a heat treatment by a rotary furnace.

14. The method for producing a spherical silica powder according to any one of claims 1 to 13, the method further comprising:
after the firing, crushing the particles such that the average circularity of the particles does not fall below 0.90.

# INTERNATIONAL SEARCH REPORT

International application No.

**PCT/JP2023/021630**

## A. CLASSIFICATION OF SUBJECT MATTER

***C01B 33/193***(2006.01)i
FI:   C01B33/193

According to International Patent Classification (IPC) or to both national classification and IPC

## B. FIELDS SEARCHED

Minimum documentation searched (classification system followed by classification symbols)

C01B33/193

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | WO 2009/072218 A1 (CATALYSTS & CHEMICALS INDUSTRIES CO., LTD.) 11 June 2009 (2009-06-11)<br>       paragraphs [0054]-[0090], fig. 3, 4 | 1, 3, 4, 14 |
| A |  | 2 |
| X | JP 2010-138022 A (JGC CATALYSTS & CHEMICALS LTD) 24 June 2010 (2010-06-24)<br>       paragraphs [0048]-[0065], fig. 1 | 1, 4 |
| X | JP 2005-60263 A (DOKAI CHEMICAL INDUSTRIES CO LTD) 10 March 2005 (2005-03-10)<br>       paragraphs [0036]-[0057] | 1, 4 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 August 2023** | **05 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/021630**

| Box No. III | Observations where unity of invention is lacking (Continuation of item 3 of first sheet) |
|---|---|

This International Searching Authority found multiple inventions in this international application, as follows:

Document 1; WO 2009/072218 A1 (CATALYSTS & CHEMICALS INDUSTRIES CO., LTD.) 11 June 2009 (2009-06-11) paragraphs [0054]-[0090], fig. 3, 4

Claims 1-14 are classified into the following three inventions.

(Invention 1) Claims 1-4 and 14
Document 1 indicates, as example 1, that dried powder 2A of porous silica-based particles with a non-sphericity rate of 0.5%, i.e., a sphericity of 99.5%, was fired at a temperature of 450°C for 3 hours to obtain calcined powder 3A of porous silica-based particles with a non-sphericity rate of 0.5% i.e., a sphericity of 99.5%, and when powder 3A was fired at a temperature of 850°C for 30 minutes, the ignition loss rate was 2.8 wt%. Here, a "dry powder 2A of porous silica-based particles with a sphericity of 99.5%" and a "calcined powder 3A of porous silica-based particles with a sphericity of 99.5%" described in document 1 correspond to a "spherical and porous silica precursor" and a "spherical silica powder" in the invention according to claim 1 of the present application, respectively. Document 1 does not indicate that the firing is carried out in a special device such as a fluidized bed, so the dried powders 2A of porous silica particles are left and fired while in contact with each other. Also, since the ignition loss rate when the powder 3A is fired at 850°C for 30 minutes is 2.8wt%, measuring the weight loss rate when powder 3A is dried at 230°C for 12 hours is likely to meet 10% or less. After firing, powder 3A becomes cake-shaped, so it is obvious that crushing is performed.
Accordingly, the invention in claims 1, 3, 4, and 14 lacks novelty in a light of document 1, and thus does not have a special technical features. Also, the invention in claim 2 have the special technical feature in which "$D_2/D_1$ is 0.9 or more."
Therefore, claims 1-4 and 14 are classified as invention 1.

(Invention 2) Claims 5-8
Claims 5-8 cannot be considered to have a special technical feature identical or corresponding to that of claim 2 classified as invention 1, are not dependent on claim 1, and are not classified as invention 1.
Also, claim 5 has the special technical feature in which the silica precursor is heat treated at a specific temperature, and is thus classified as invention 2.

(Invention 3) Claims 9-13
Claims 9-13 cannot be considered to have a special technical feature identical or corresponding to that of claim 2 classified as invention 1 or claim 5 classified as invention 2, are not dependent on claim 1 or 5, and thus cannot be classified as inventions 1 and 2.
Also, claim 9 has the special technical feature in which the silica precursor has a specific pore volume and specific surface area, and is thus classified as invention 3.

Form PCT/ISA/210 (continuation of first sheet) (January 2015)

**INTERNATIONAL SEARCH REPORT**

| International application No. |
|---|
| **PCT/JP2023/021630** |

| Box No. III     Observations where unity of invention is lacking (Continuation of item 3 of first sheet) |
|---|

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-4 and 14**

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

INTERNATIONAL SEARCH REPORT
Information on patent family members

International application No.

**PCT/JP2023/021630**

| Patent document cited in search report | | | Publication date (day/month/year) | Patent family member(s) | Publication date (day/month/year) |
|---|---|---|---|---|---|
| WO | 2009/072218 | A1 | 11 June 2009 | US 2010/0247914 A1 paragraphs [0140]-[0237], fig. 3, 4 EP 2228344 A1 KR 10-2010-0106335 A | |
| JP | 2010-138022 | A | 24 June 2010 | (Family: none) | |
| JP | 2005-60263 | A | 10 March 2005 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2921058 B
- JP 5686099 B
- JP H0466809 B
- JP 6814906 B
- WO 2013062105 A
- JP 2022095197 A
- JP 2022095198 A
- JP 2022095199 A